# FASCICULE DE BREVET EUROPEEN

(11) **EP 2 819 910 B1**
(45) Date de publication et mention de la délivrance du brevet: **04.05.2016**
(21) Numéro de dépôt: 13712856.7
(22) Date de dépôt: 27.02.2013
(51) Int. Cl.: B62B 5/00, B62B 5/06

(54) **CHARIOT DE TRANSPORT TRANSFORMABLE À HAUTEUR ADAPTABLE PAR RABATTEMENT DE JAMBES ET DE ROUES ET ACTIONNEMENT DE MOYENS D'ADAPTATION**
KONVERTIBLER WAGEN DESSEN HÖHE DURCHS ZUSAMMENKLAPPEN DER FÜSSE UND DER RÄDER SOWIE DURCH BETÄTIGUNG EINES EINRICHTUNGSMITTELS GEÄNDERT WERDEN KANN
CONVERTIBLE HAND CART WHOSE HEIGHT IS ADAPTABLE THROUGH LEG AND WHEEL FOLDING AND THROUGH THE ACTUATION OF ADAPTING MEANS

(30) Priorité: 01.03.2012 FR 1251886
(43) Date de publication de la demande: 07.01.2015
(73) Titulaire: Peugeot Citroën Automobiles SA, 78140 Vélizy Villacoublay (FR)
(72) Inventeur: HERBAULT, Patrick, F-92250 La Garenne Colombes (FR); MARQUES, Frédéric, F-94370 Sucy En Brie (FR); SAULNIER, Fabien, F-94270 Le Kremlin Bicetre (FR)
(86) Numéro de dépôt international: PCT/FR2013/050398
(87) Numéro de publication internationale: WO 2013/128116

(56) Documents cités:
- WO-A1-2010/001398
- DE-A1- 4 103 379
- DE-U1-202010 008 627
- FR-A1- 2 971 220
- US-A1- 2008 093 827
- US-A1- 2010 140 887

## Description

L'invention concerne les chariots de transport qui sont utilisés pour transporter des charges et qui peuvent être transformés afin de pouvoir être entreposés ou déposés, éventuellement avec leur charge(s), sur un plancher de dépose distant du sol.

On entend ici par « chariot de transport » un système (ou appareil) transformable pouvant rouler lorsqu'il est tiré ou poussé et pouvant supporter au moins une charge. Par conséquent, il pourra s'agir d'un brancard, d'une table roulante (définissant éventuellement un établi), d'une vitrine réfrigérée et roulante, d'un diable, d'un chariot de course ou d'un élément modulaire de faux-plancher de véhicule, par exemple.

Par ailleurs, dans ce qui suit le mot « charge » désigne tout corps pesant, qu'il s'agisse d'une personne, d'un animal, d'un végétal ou d'un objet.

Comme le sait l'homme de l'art, certains chariots de transport comprennent une structure de support de charge(s), comportant deux parties longitudinales (éventuellement solidarisées à un plateau supérieur), et une ou deux paires de jambes. Chaque jambe est constituée d'un montant ayant une extrémité supérieure montée à rotation suivant une direction transversale respectivement sur l'une des parties longitudinales et une extrémité inférieure munie d'une roue.

Les jambes peuvent ainsi être entraînées en rotation vers la structure de support afin de réduire l'encombrement du chariot de transport suivant la direction verticale, par exemple en vue d'une installation dans un véhicule, comme par exemple une ambulance ou une partie arrière de véhicule utilitaire ou particulier.

Ce type de chariot de transport a été initialement conçu pour permettre à des personnes de transporter des charges jusque sur une surface de stockage, comme par exemple un plancher de véhicule automobile (de type break ou utilitaire), tout en laissant ces charges sur la structure de support, avec les jambes rabattues (ou rétractées), en vue d'un déchargement ultérieur après redressement des jambes.

Un tel chariot est divulgué dans le document US 2008/0093827 A1 qui décrit un chariot de transport selon le préambule de la revendication 1.

Certains modes de réalisation, comme par exemple celui qui est décrit dans le document brevet FR 2781745, permettent de placer le montant qui constitue une jambe sensiblement parallèlement à la partie longitudinale à laquelle il est solidarisé en rotation. Cela permet de réduire encore plus l'encombrement vertical du chariot de transport. Cependant, lorsque les roues ont un diamètre supérieur à environ 10 cm, elles ne peuvent plus être intégralement contenues dans l'espace qui est défini par l'extension verticale des parties latérales de la structure de support, ce qui contribue à augmenter l'encombrement vertical du chariot de transport, et rend plus difficile son immobilisation sur une surface sensiblement plane, comme par exemple un plancher de véhicule. En outre, lorsque le chariot de transport comprend une poignée montée à rotation sur sa structure de support, une fois que la poignée a été rabattue, elle n'est que partiellement intégrée dans l'espace qui est défini par l'extension verticale des parties latérales de la structure de support. Cela contribue à augmenter l'encombrement vertical du chariot de transport et empêche de définir une surface supérieure plane qui permettrait de le transformer en une espèce de faux-plancher pour lequel l'extension verticale, une fois plié, est un paramètre crucial.

Par ailleurs, la hauteur à laquelle se trouve placée la structure de support de charge(s) d'un chariot de transport connu ne peut pas être adaptée à la hauteur à laquelle se trouve situé le plancher (éventuellement d'un véhicule) sur lequel il doit être entreposé ou déposé une fois plié. De ce fait, dans de nombreuses situations il peut s'avérer difficile, voire impossible, de replier un chariot de transport connu lorsque l'on veut l'entreposer ou le déposer sur un plancher, en particulier lorsqu'il transporte au moins une charge.

L'invention a donc notamment pour but d'améliorer la situation, et en particulier de permettre une adaptation de la hauteur à laquelle se trouve placée la structure de support de charge(s) d'un chariot de transport par rapport à celle à laquelle se trouve situé le plancher de dépose sur lequel on veut entreposer ou déposer ce dernier une fois plié, tout en offrant un encombrement vertical réduit.

Elle propose à cet effet un chariot de transport selon la revendication 1.

L'expression « sous charge » signifie non seulement en présence d'une charge sur la structure de support, mais également sous l'effet du propre poids du chariot de transport.

Grâce à l'invention, la combinaison de moyens permettant le rabattement par inclinaison des roues et des jambes déformables et de moyens d'adaptation permet d'adapter facilement la hauteur à laquelle est située la structure de support par rapport au sol et donc par rapport au plancher de dépose. En outre, une fois que les montants et les roues ont été rabattus parallèlement aux parties latérales, ils sont intégralement contenus dans l'espace qui est défini par l'extension verticale des parties latérales, ce qui permet d'obtenir un chariot de transport de faible encombrement vertical.

Le chariot de transport selon l'invention peut comporter en outre d'autres caractéristiques qui peuvent être prises séparément ou en combinaison, et notamment :
- ses moyens d'adaptation peuvent comprendre au moins deux pieds et/ou au moins deux roulettes escamotables ;
- il peut comprendre des moyens de préhension montés à rotation suivant la direction transversale sur une portion arrière des parties longitudinales de manière à pouvoir être placés soit dans une position redressée adaptée à la préhension, soit dans une position rabattue sensiblement perpendiculaire aux parties longitudinales et au niveau de ces dernières ;
   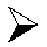 il peut comprendre une paire de glissières solidarisées fixement aux parties longitudinales et auxquelles sont couplées à coulissement et respectivement des premières extrémités de premières barres faisant partie des moyens de préhension ;
      - les moyens de préhension peuvent comprendre une barre de préhension sensiblement transversale et couplée à des secondes extrémités des premières barres, et deux secondes barres comprenant chacune une première extrémité couplée à rotation à une partie intermédiaire de l'une des premières barres et une seconde extrémité couplée à rotation à l'une des parties longitudinales ;
         o chaque seconde extrémité d'une seconde barre peut se projeter en dessous de la partie longitudinale à laquelle elle est couplée à rotation lorsque sa seconde barre fait un angle supérieur à une première valeur prédéfinie par rapport à cette partie longitudinale, de manière à constituer une partie des moyens d'adaptation ;
            ▪ ses moyens d'adaptation peuvent comprendre deux barres auxiliaires couplées chacune à rotation à une partie avant d'une partie longitudinale de manière à se projeter en dessous de cette dernière lorsqu'elle fait un angle supérieur à une deuxième valeur prédéfinie par rapport à cette partie longitudinale, et couplées mécaniquement aux secondes barres via deux tringles de manière à être entraînées en rotation lorsque ces secondes barres sont également entraînées en rotation ;
      - ses moyens d'adaptation peuvent comprendre deux paires de pieds auxiliaires repliables, en forme de Y, couplés mécaniquement entre eux, et comportant chacun une première partie montée à rotation sur une partie longitudinale et une seconde partie couplée à rotation à la première partie et montée à coulissement dans une glissière de cette partie longitudinale. Dans ce cas, chaque première extrémité d'une première barre peut être agencée pour provoquer le coulissement de la seconde partie d'un pied auxiliaire correspondant de sorte qu'elle se redresse en se projetant en dessous de la partie longitudinale correspondante lorsque la première barre fait un angle supérieur à une troisième valeur prédéfinie, plus grande que la première valeur, par rapport à cette partie longitudinale ;
- le parallélépipède déformable peut être propre à se déformer en vue d'un repliement longitudinal avant que les roues ne pivotent sous charge pour passer dans leur position rabattue ;
- dans une première variante de réalisation, les roues peuvent être propres à pivoter sous charge pour passer dans leur position rabattue avant que le parallélépipède déformable ne se déforme ;
- dans une seconde variante de réalisation, il peut comprendre des moyens de couplage assurant un couplage mécanique des roues et des jambes d'au moins une paire, de sorte que le parallélépipède déformable se déforme en vue d'un repliement longitudinal en même temps que les roues pivotent sous charge pour passer dans leur position rabattue ;
- il peut comprendre une paire de jambes dite arrière et une paire de jambes dite avant, placées à des niveaux différents suivant la direction longitudinale ;
- en variante, il peut comprendre un cadre inférieur comportant deux bords longitudinaux munis chacun de deux platines qui supportent chacune une roue et qui sont montées à rotation suivant la direction longitudinale et à des niveaux différents suivant cette dernière ;
   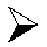 il peut comprendre deux montants auxiliaires comprenant chacun une première extrémité, montée à rotation suivant la direction transversale sur l'une des parties longitudinales, et une seconde extrémité, pouvant être soit solidarisée à l'un des bords longitudinaux, soit désolidarisée de ce bord longitudinal afin que son montant auxiliaire puisse être rabattu sensiblement parallèlement à la partie longitudinale correspondante ;
- il peut comprendre au moins une paire de glissières solidarisées fixement aux parties longitudinales et auxquelles sont couplées à coulissement et respectivement les jambes d'une paire ;
   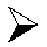 il peut comprendre au moins une paire de platines auxiliaires auxquelles sont respectivement solidarisées à rotation les jambes d'une paire et elles-mêmes solidarisées à coulissement aux glissières d'une même paire ;
- il peut comprendre au moins un moteur électrique propre à entraîner en rotation les jambes d'au moins une même paire afin de les faire passer d'une position redressée, adaptée au support, à une position rabattue, et inversement, et une batterie propre à alimenter ce moteur électrique en énergie électrique ;
- la structure peut comprendre au moins une première prise électrique propre à être raccordée à une deuxième prise électrique d'alimentation ;
   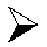 la structure peut comprendre au moins une troisième prise électrique raccordée à la première prise électrique et propre à être raccordée à une prise électrique d'un élément électrique supporté par la structure ;
- il peut constituer un élément modulaire de faux-plancher de véhicule.

L'invention propose également un véhicule, éventuellement de type automobile, et comprenant une partie arrière agencée de manière à recevoir au moins un chariot de transport du type de celui présenté ci-avant, après qu'il ait été configuré dans une position repliée de rangement.

La partie arrière d'un tel véhicule pourra comprendre des moyens de verrouillage propres à immobiliser dans une position choisie chaque chariot de transport configuré dans sa position repliée de rangement.

D'autres caractéristiques et avantages de l'invention apparaîtront à l'examen de la description détaillée ci-après, et des dessins annexés, sur lesquels :
- la figure 1 illustre schématiquement, dans une vue en perspective (côté arrière), un premier exemple de réalisation de chariot de transport selon l'invention en position déployée,
- la figure 2 illustre de façon schématique et fonctionnelle, dans une vue de côté, une variante du chariot de transport de la figure 1 en position déployée,
- les figures 3 à 6 illustrent de façon schématique et fonctionnelle, dans des vues de côté, le chariot de transport de la figure 2 à différents stades d'une phase d'installation dans une partie arrière de véhicule,
- la figure 7 illustre schématiquement, dans une vue de dessous, le chariot de transport de la figure 1 en position repliée,
- la figure 8 illustre schématiquement, dans une vue en perspective (côté arrière), un deuxième exemple de réalisation de chariot de transport selon l'invention en position déployée,
- la figure 9 illustre de façon schématique et fonctionnelle, dans une vue de côté, une variante du chariot de transport de la figure 8 en position déployée,
- les figures 10 à 13 illustrent de façon schématique et fonctionnelle, dans des vues de côté, le chariot de transport de la figure 9 à différents stades d'une phase d'installation dans une partie arrière de véhicule,
- la figure 14 illustre schématiquement, dans une vue de dessous, le chariot de transport de la figure 1 en position repliée,
- la figure 15 illustre schématiquement, dans une vue de côté, un troisième exemple de réalisation de chariot de transport selon l'invention en position déployée,
- la figure 16 illustre de façon schématique et fonctionnelle, dans une vue de côté, le chariot de transport de la figure 15 au tout début d'une phase de repliement,
- la figure 17 illustre de façon schématique et fonctionnelle, dans une vue de côté, le chariot de transport de la figure 15 un peu avant la fin d'une phase de repliement, avec un premier exemple de réalisation de moyens d'adaptation en cours d'utilisation,
- la figure 18 illustre de façon schématique et fonctionnelle, dans une vue de côté, le chariot de transport de la figure 15 un peu avant la fin d'une phase de repliement, avec un second exemple de réalisation de moyens d'adaptation en cours d'utilisation,
- les figures 19 à 21 illustrent de façon schématique et fonctionnelle, dans des vues en coupe dans un plan transversal, trois étapes d'une phase de redressement d'un exemple d'ensemble de roues d'un chariot de transport selon l'invention, et
- la figure 22 illustre schématiquement, dans une vue en perspective (du côté arrière), un exemple de chariot de transport selon l'invention installé dans un véhicule utilitaire et supportant des charges.

Les dessins annexés pourront non seulement servir à compléter l'invention, mais aussi contribuer à sa définition, le cas échéant.

L'invention a pour but d'offrir un chariot de transport CT pouvant transporter des charges et être transformé afin de pouvoir être entreposés ou déposés, éventuellement avec ses charges.

Dans ce qui suit, on considère, à titre d'exemple non limitatif, que les charges sont des objets (ou appareils) ou des végétaux. Mais, l'invention n'est pas limitée à ce type de charge. Elle concerne en effet tout type de corps pesant, qu'il s'agisse d'une personne, d'un animal, d'un végétal ou d'un objet. Par ailleurs, même si dans l'exemple ici présenté, le chariot de transport CT est une table roulante (définissant éventuellement un établi), l'invention n'est pas limitée à ce type de chariot de transport. Elle concerne également les chariots de transport qui constituent des brancards, des vitrines réfrigérées et roulantes, des diables, des chariots de course ou des éléments modulaires de faux-plancher de véhicule, par exemple. De plus, on considère dans ce qui suit, à titre d'exemple non limitatif, que le chariot de transport CT présente des dimensions adaptées à son installation dans un véhicule V, par exemple de type utilitaire, où il peut éventuellement servir, une fois replié, de faux-plancher.

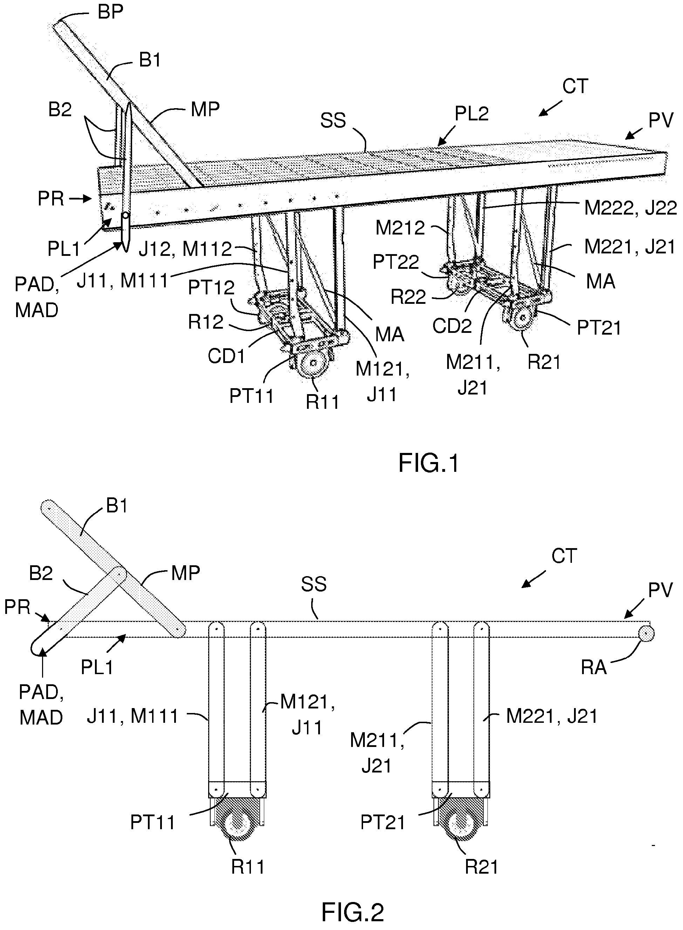

On se réfère tout d'abord aux figures 1 à 7 pour décrire un premier exemple de réalisation, non limitatif, de chariot de transport CT selon l'invention.

Comme illustré, un chariot de transport CT, selon l'invention, comprend au moins une structure de support SS, au moins une paire de jambes Jik couplées à rotation à la structure de support SS et des moyens d'adaptation MAD.

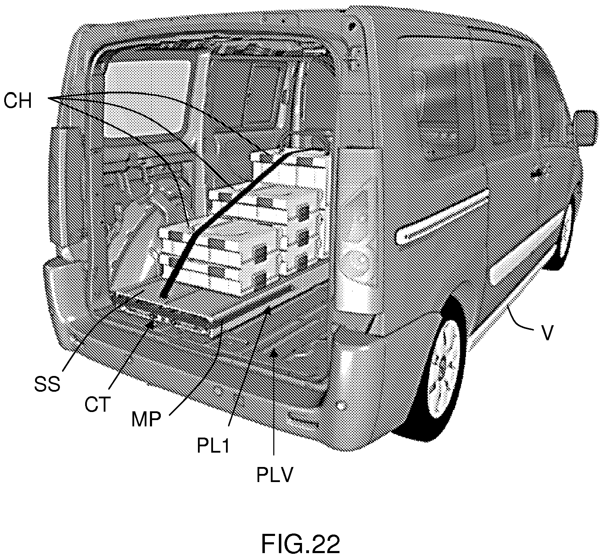

La structure de support SS est agencée de manière à supporter au moins une charge CH, éventuellement logée dans un casier (ou coffre ou panier) CA (voir figure 22), dont les dimensions sont éventuellement adaptées à ses propres dimensions. On notera que dans l'exemple non limitatif illustré sur les figures 1 à 7, la structure de support SS comprend un plateau supérieur ajouré localement. Mais cela n'est pas obligatoire. Il pourrait par exemple s'agir plus simplement d'un cadre (éventuellement muni de traverses et/ou longerons de rigidification).

Cette structure de support SS comporte notamment deux parties longitudinales PLk (k = 1 ou 2) sur lesquelles sont respectivement montées à rotation, suivant une direction transversale (perpendiculaire à la direction longitudinale des parties longitudinales PLk), les jambes Jik d'au moins une paire de jambes. On notera que dans l'exemple non limitatif illustré sur les figures 1 à 7, la structure de support SS comprend deux paires de jambes (J11, J12) et (J21, J22). L'indice i désigne ici l'une des paires de jambes. Par exemple, la paire de jambes (J11, J12), soit i = 1, est celle qui est placée du côté de la partie arrière PR du chariot de transport CT, tandis que la paire de jambes (J21, J22), soit i = 2, est celle qui est placée du côté de la partie avant PV du chariot de transport CT. Mais dans des variantes de réalisation la structure de support SS peut ne comprendre qu'une seule paire de jambes (J11, J12).

Chaque jambe Jik est munie d'au moins une roue Rik, pouvant éventuellement être entraînée en rotation sur 360°. Par ailleurs, selon l'invention chaque jambe Jik d'une même paire (i) comprend deux montants Mijk (j = 1 ou 2) qui, d'une part, comportent chacun deux extrémités opposées solidarisées respectivement à la partie longitudinale PLk correspondante et à une platine PTik qui supporte la roue Rik, et, d'autre part, participe avec cette platine PTik à la définition d'un parallélépipède déformable dans lequel les montants Mijk sont rabattables sensiblement parallèlement à la partie longitudinale PLk correspondante.

On comprendra qu'une fois que les montants Mijk ont été rabattus parallèlement aux parties latérales PLk, ils sont intégralement contenus dans l'espace qui est défini par l'extension verticale des parties latérales PLk. La direction verticale est une direction qui est perpendiculaire aux directions transversale et longitudinale.

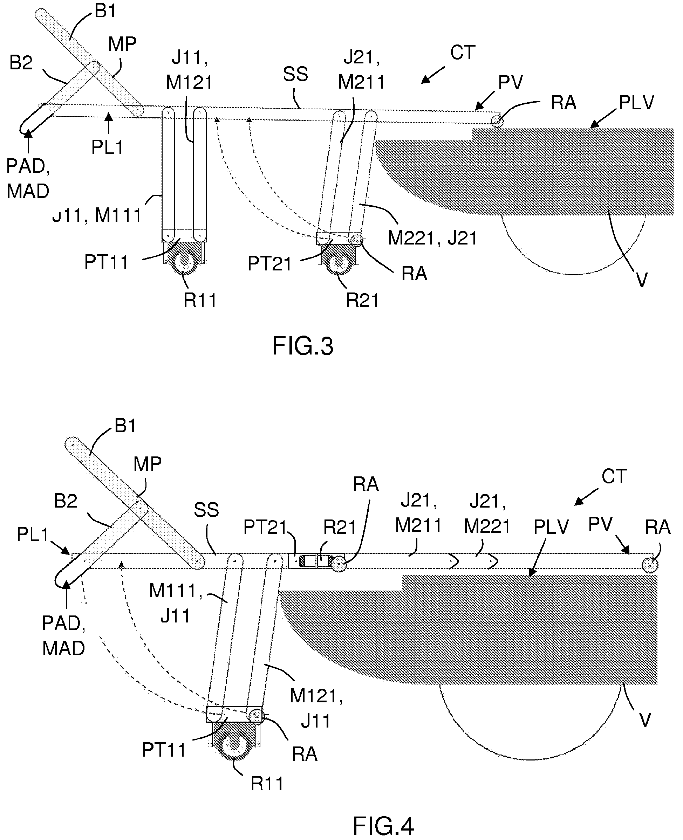

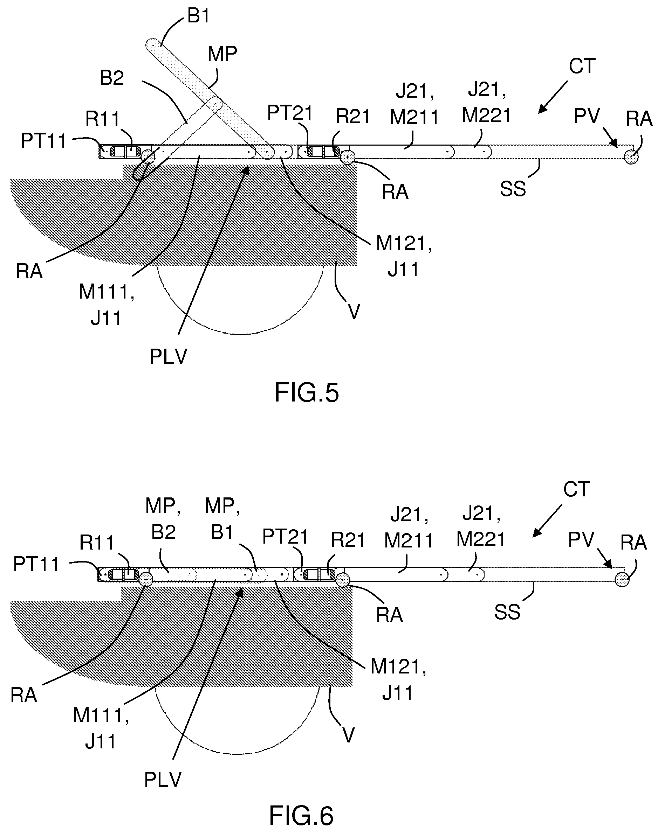

On a schématiquement illustré sur les figures 3 à 6 différents stades d'une phase d'installation d'un chariot de transport CT, du type de celui illustré sur la figure 2, dans une partie arrière d'un véhicule V. Une fois que la partie arrière du véhicule V est accessible, on pousse le chariot de transport CT vers le véhicule V en faisant pénétrer dans cette partie arrière de véhicule V, au-dessus de son plancher PLV, la partie avant PV de sa structure de support SS (voir figure 3). Lorsque les jambes avant J21 et J22 entrent en contact avec le véhicule V, elles sont contraintes de se rabattre vers l'arrière parallèlement aux parties latérales PLk afin d'être intégralement contenues dans l'espace qui est défini par l'extension verticale de ces parties latérales PLk (voir figure 4). La phase finale de rabattement des jambes avant J2k provoque le rabattement des roues avant R2k. Ensuite, on continue de pousser le chariot de transport CT vers l'avant du véhicule V jusqu'à ce que les jambes arrière J11 et J12 entrent en contact avec le véhicule V et soient contraintes de se rabattre vers l'arrière parallèlement aux parties latérales PLk afin d'être intégralement contenus dans l'espace qui est défini par l'extension verticale de ces parties latérales PLk (voir figure 5). La phase finale de rabattement des jambes arrière J1 k provoque le rabattement des roues arrière R2k. Ensuite, on continue de pousser le chariot de transport CT vers l'avant du véhicule V jusqu'à ce qu'il parvienne dans une position d'immobilisation, de préférence prédéfinie, où il peut être immobilisé par tout moyen connu de l'homme de l'art, et par exemple grâce à des moyens d'ancrage définis dans le plancher PLV du véhicule V. Enfin, lorsque le chariot de transport CT comprend des moyens de préhension MP, comme illustré, on rabat ces derniers en direction de la structure de support SS afin qu'ils soient intégralement contenus dans l'espace qui est défini par l'extension verticale des parties latérales PLk, éventuellement à l'extérieur de ces dernières (PLk) (voir figure 6).

Comme illustré non limitativement les éventuels moyens de préhension MP peuvent être solidarisés (directement ou indirectement) à la structure de support SS dans la partie arrière PR. Ces moyens de préhension MP peuvent, comme illustré, comprendre une poignée qui peut être avantageusement rabattue afin d'être intégralement contenue dans l'espace qui est défini par l'extension verticale des parties latérales PLk.

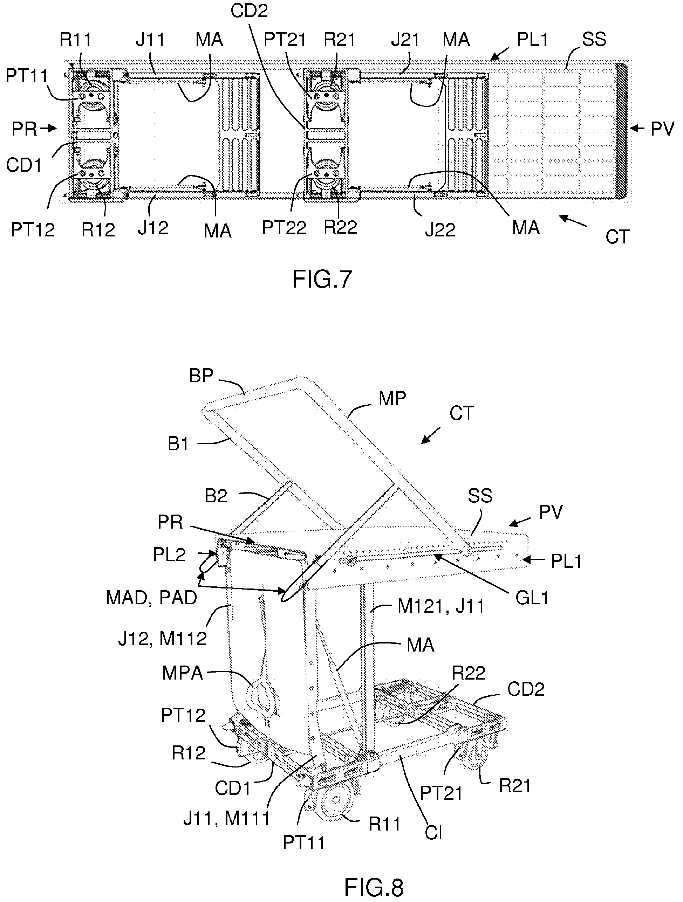

Cette poignée MP peut, par exemple et comme illustré non limitativement, comprendre une barre de préhension BP sensiblement transversale, deux premières barres B1 et deux secondes barres B2. Chaque première barre B1 comprend une première extrémité montée à coulissement dans une ouverture (ou glissière) GLk qui est définie dans l'une des parties latérales PLk (voir figure 8) et une seconde extrémité solidarisée à l'une des deux extrémités opposées de la barre de préhension BP. Chaque seconde barre B2 comprend une première extrémité couplée à rotation à une partie intermédiaire de l'une des premières barres B1 et une seconde extrémité couplée à rotation à l'une des parties longitudinales PLk.

Lorsque l'on veut rabattre une telle poignée MP, on pousse sa barre de préhension BP vers la partie avant PV, tout en exerçant sur elle une pression de haut en bas, afin de faire coulisser vers l'avant dans les glissières GLk les premières extrémités de ses premières barres B1. L'opération inverse doit être effectuée lorsque l'on veut redresser cette poignée MP.

On notera que la poignée MP peut être éventuellement couplée à un mécanisme de verrouillage destiné au moins à la maintenir dans sa position redressée.

On notera également que la poignée MP, et en particulier sa barre de préhension BP, peut être éventuellement amovible, par exemple afin de faciliter l'installation d'un autre chariot de transport à côté de son propre chariot de transport.

On notera également que la position de la poignée MP peut éventuellement influer sur l'état de verrouillage/déverrouillage de certains au moins des éventuels moyens de verrouillage.

On notera également, comme illustré non limitativement sur la figure 8, que le chariot de transport CT peut éventuellement comprendre des moyens de préhension auxiliaires MPA couplés à sa paire de jambes arrière (J11, J12). Ces moyens de préhension auxiliaires MPA peuvent, comme illustré, comprendre une poignée montée à rotation afin de pouvoir être avantageusement rabattue et redressée.

On notera également que le chariot de transport CT, et notamment sa structure de support SS, peut être pourvu de moyens d'immobilisation destinés à permettre son immobilisation par rapport au véhicule V.

Par ailleurs, chaque platine PTik est au moins montée à rotation suivant la direction longitudinale de sorte que sa roue (ou ses roues) Rik puisse(nt) pivoter sous charge et passer d'une position dépliée sensiblement verticale à une position rabattue sensiblement perpendiculaire à la partie longitudinale PLk correspondante et au niveau de cette dernière (PLk).

On entend ici par « au niveau » le fait d'être intégralement contenu dans l'espace qui est défini par l'extension verticale des parties latérales PLk.

Par ailleurs, l'expression « sous charge » signifie ici non seulement en présence d'une charge sur la structure de support SS, mais également sous l'effet du propre poids du chariot de transport CT.

On notera, comme illustré non limitativement sur la figure 7, que chaque platine PTik est préférentiellement rabattue entre les parties latérales PLk, afin de ne pas augmenter l'encombrement du chariot de transport CT suivant la direction transversale. Mais cela n'est pas obligatoire.

On notera également que le chariot de transport CT peut être introduit et installé dans le véhicule V avec ou sans charge CH. Ainsi, dans l'exemple illustré sur les figures 3 à 6, le chariot de transport CT est introduit et installé dans le véhicule V sans charge CH, ce qui n'empêche pas que des charges soient placées dessus ultérieurement, alors que dans l'exemple illustré sur la figure 22, le chariot de transport CT a été introduit et installé dans le véhicule V avec des charges CH.

Pour procéder à l'extraction du chariot de transport CT hors du véhicule V, on effectue les opérations présentées ci-avant dans le sens inverse, en le tirant au moyen de ses éventuels moyens de préhension MP (après qu'ils aient été redressés). On comprendra que dès que les jambes arrière ou avant se retrouvent en porte à faux dans le vide (à l'extérieur du véhicule V), elles commencent à se redresser afin de pouvoir de nouveau supporter la structure de support SS et ses éventuelles charges CH.

Ce mouvement de redressement des roues Rik peut être obtenu de différentes manières, et notamment :
- par simple effet de gravité associé à un mécanisme de blocage à environ 90°,
- sous l'action d'un ressort à gaz (central ou doublé par côté), de préférence associé à un mécanisme de blocage à environ 90°,
- sous l'action d'un ressort à gaz (central ou doublé par côté) qui peut être bloqué, et qui peut être éventuellement et avantageusement commandé à distance afin d'offrir des positions intermédiaires. Pour une question d'ergonomie, il peut s'avérer judicieux de regrouper ces commandes à distance à l'arrière du chariot à portée de main.

On notera que la hauteur des jambes Jik est ici adaptée à la gamme de hauteurs auxquelles sont généralement placés les planchers PLV des véhicules V de type utilitaire. Cette hauteur peut être variable selon les applications envisagées.

Les moyens d'adaptation MAD sont agencés de manière à permettre une élévation de la structure de support SS par rapport au sol sur lequel reposent initialement les roues Rik en vue d'une adaptation à la hauteur à laquelle est situé le plancher PLV sur lequel le chariot de transport CT doit être déposé (ou entreposé) une fois plié. Les moyens qui permettent le rabattement des roues Rik et des jambes Jik par inclinaison participent également à l'adaptation de la hauteur à laquelle est située la structure de support SS par rapport au sol. On exploite en effet, ici, la possibilité d'inclinaison longitudinale des jambes Jik vers l'avant ou l'arrière, par déformation du parallélépipède à géométrie variable, et l'inclinaison latérale des roues Rik.

Cela permet très avantageusement d'utiliser le chariot de transport CT dans de nombreuses situations dans lesquelles soit la hauteur du plancher PLV diffère légèrement de la hauteur à laquelle est située la structure de support SS lorsque ledit chariot de transport CT est dans une position dépliée, soit un obstacle situé juste avant le plancher PLV culmine à une hauteur supérieure à celle de ce dernier (PLV), c'est notamment le cas de certains seuils de coffre ou de certaines gâches de volet arrière, soit encore une zone de seuil située juste avant le plancher PLV culmine à une hauteur inférieure à celle de ce dernier (PLV).

On notera également que :
- chaque parallélépipède déformable peut être propre à se déformer en vue d'un repliement longitudinal avant que les roues Rik ne pivotent sous charge pour passer dans leur position rabattue,
- ou bien les roues Rik peuvent être propres à pivoter sous charge pour passer dans leur position rabattue avant que les parallélépipèdes déformables ne se déforment,
- ou encore le chariot de transport CT peut également comprendre des moyens de couplage (non représentés) qui assurent un couplage mécanique des roues Rik et des jambes Jik de l'une au moins des paires, de sorte que les parallélépipèdes déformables se déforment en vue d'un repliement longitudinal en même temps que les roues Rik pivotent sous charge pour passer dans leur position rabattue. En d'autres termes, l'inclinaison des jambes Jik est ici liée à l'inclinaison des roues Rik. Pour ce faire, chaque côté longitudinal du chariot de transport CT peut, par exemple, comporter un système d'engrenage à renvoi d'angle positionné entre l'extrémité inférieure de l'une des jambes Jik et la biellette de commande d'inclinaison de la roue associée.

On notera également que les moyens d'adaptation MAD sont préférentiellement mis en oeuvre en dernier pour surélever de quelques centimètres la structure de support SS.

Ces moyens d'adaptation MAD peuvent, par exemple, comprendre au moins deux pieds et/ou au moins deux roulettes (non représentés) escamotables manuellement, par exemple au moyen des éventuels moyens de préhension MP, ou de façon motorisée.

Dans une variante de réalisation avantageuse, illustrée sur les figures 1 à 18, chaque seconde extrémité de la seconde barre B2 des moyens de préhension MP peut se projeter en dessous de la partie longitudinale PLk à laquelle elle est couplée à rotation lorsque sa seconde barre B2 fait un angle qui est supérieur à une première valeur prédéfinie par rapport à cette partie longitudinale PLk. Ainsi, chaque seconde extrémité d'une seconde barre B2 constitue une partie PAD des moyens d'adaptation MAD. Par exemple, la première valeur peut être égale à 15°. Dans ce cas, plus l'angle d'inclinaison des secondes barres B2 est élevé, plus la structure de support SS peut être surélevée. Par exemple, on peut faire varier l'élévation lorsque l'angle varie entre environ 15° et environ 45°. On notera que ce mode de réalisation ne permet de surélever que la partie arrière PR de la structure de support SS.

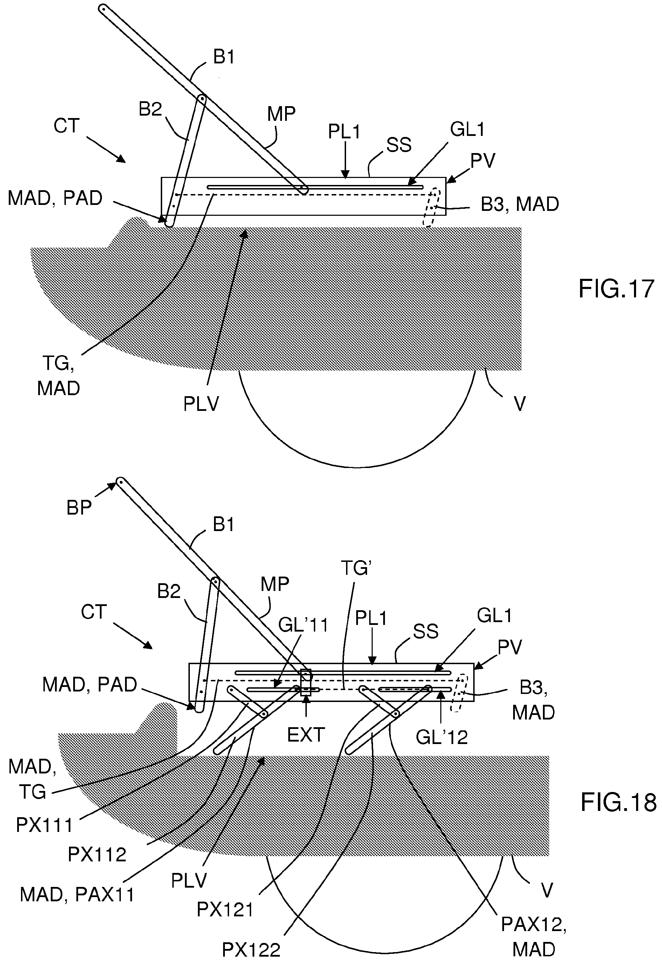

Afin de garder la structure de support SS sensiblement horizontale par rapport au plancher PLV de dépose, les moyens d'adaptation MAD peuvent également comprendre, comme illustré non limitativement sur les figures 17 et 18, deux barres auxiliaires B3 et deux tringles TG. Chaque barre auxiliaire B3 est couplée à rotation à une partie avant de l'une des parties longitudinales PLk de manière à se projeter en dessous de ces dernières (PLk) lorsqu'elle fait un angle supérieur à une deuxième valeur prédéfinie par rapport à ces parties longitudinales PLk. Cette deuxième valeur et par exemple sensiblement égale à la première valeur. Par ailleurs, chaque barre auxiliaire B3 est couplée mécaniquement à l'une des secondes barres B2 des moyens de préhension MP via une tringle TG, de manière à être entraînée en rotation lorsque la seconde barre B2 correspondante est également entraînée en rotation.

Dans une variante de réalisation, ou en complément de la variante précédente, comme illustrée non limitativement sur la figure 18, les moyens d'adaptation MAD peuvent comprendre deux paires de pieds auxiliaires PAXkm (m = 1 ou 2) repliables, en forme de Y, couplés mécaniquement entre eux (par exemple par une tringle TG'), et comportant chacun une première partie PXkm1, montée à rotation sur une partie longitudinale PLk, et une seconde partie PXkm2, couplée à rotation à la première partie PXkm1 et montée à coulissement dans une glissière GL'km de cette partie longitudinale PLk. Dans ce cas, chaque première extrémité d'une première barre B1 des moyens de préhension MP peut être agencée pour provoquer le coulissement de la seconde partie PXkm2 d'un pied auxiliaire PAXkm correspondant, par exemple via une extension EXT, de sorte qu'elle se redresse en se projetant en dessous de la partie longitudinale PLk correspondante lorsque cette première barre B1 fait un angle supérieur à une troisième valeur prédéfinie, plus grande que la première valeur, par rapport à cette partie longitudinale PLk.

En d'autres termes lorsque l'on déplace par coulissement les premières extrémités des premières barres B1 au-delà d'une certaine position, cela déclenche le déploiement des pieds auxiliaires PAXkm qui vont alors descendre simultanément au contact du plancher PLV du fait de leur couplage mécanique par une tringle TG'. Ces pieds auxiliaires PAXkm peuvent être éventuellement couplés à des ressorts de rappel destinés à les maintenir au repos dans une position repliée.

On notera également que le diamètre des roues Rik est ici adapté à des charges relativement lourdes et à des terrains de différents types. Par exemple ce diamètre est sensiblement égal à 12,5 cm. Mais d'autres diamètres peuvent être envisagés, selon les applications visées. L'invention concerne également les systèmes à trois roues montées en triangle (ou étoile), qui sont particulièrement bien adaptés au franchissement de marches. Dans ce cas, il faut que la hauteur de chaque système à trois roues, associé à une platine PTik, soit inférieure de quelques centimètres à la demi-largeur du chariot CT (par exemple 30 à 35 centimètres pour un chariot CT ayant une largeur de 60 à 70 cm).

On notera également, comme illustré non limitativement sur les figures 1 à 7, que les platines PTik d'une même paire de jambes Jik peuvent être avantageusement solidarisées à rotation à un cadre CDi. Cela permet en effet de rigidifier le chariot de transport CT tout en augmentant sa stabilité lorsqu'il est en position déployée ou redressée.

Afin de permettre le placement des deux montants Mijk d'une jambe Jik dans l'espace qui est défini par l'extension verticale des parties latérales PLk, et donc l'un sensiblement parallèle à l'autre, l'un d'entre eux (par exemple le premier Mi1 k) peut par exemple être agencé sous la forme d'une lame, tandis que l'autre (par exemple le second Mi2k) peut par exemple être agencé sous la forme d'une barre munie d'un évidement central destiné à loger une partie au moins de la lame Mi1k. En variante, les extrémités des deux montants Mijk d'une jambe Jik peuvent être légèrement décalées l'une par rapport à l'autre suivant la direction transversale.

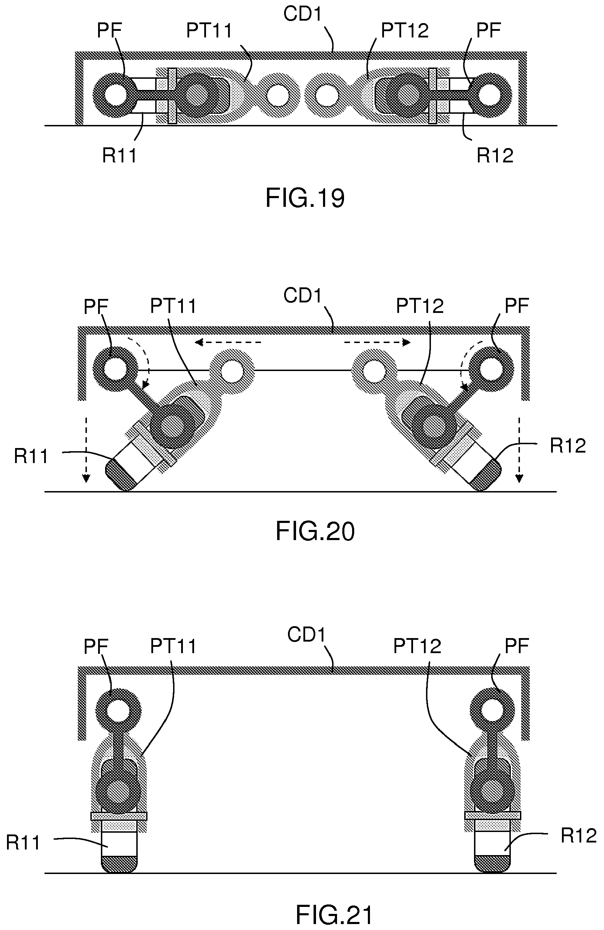

Tout mécanisme de redressement des roues Rik sous charge (associées à une paire de jambes Jik), connu de l'homme de l'art, peut être ici utilisé. Un exemple d'un tel mécanisme est schématiquement et non limitativement illustré sur les figures 19 à 21. Dans cet exemple, chaque platine PTik, sur laquelle est montée à rotation une roue Rik, est solidarisée à rotation (suivant la direction longitudinale) à une patte de fixation PF qui est elle-même solidarisée à rotation (suivant la direction longitudinale), directement ou indirectement, au cadre CDi. Lorsque le chariot de transport CT est posé sur une surface (comme par exemple un plancher PLV de véhicule V) et que l'on exerce une pression de haut en bas sur la structure de support SS, une fois que les jambes Jik ont été rabattues, cela provoque l'inclinaison progressive des platines PTik (avec leurs roues Rik), du fait qu'elles sont montées à rotation sur leurs pattes de fixation PF, jusqu'à ce qu'elles soient sensiblement parallèles au plateau de la structure de support SS. Des opérations inverses permettent de redresser les roues Rik, comme illustré par les étapes représentées sur les figures 19 à 21. Un tel mécanisme, qui exploite une cinématique du type Scott Russell, est notamment décrit dans le document brevet déposé en France sous le numéro de dépôt FR1058257.

On notera également, comme illustré non limitativement sur les figures 1, 7, 8 et 14, que chaque jambe Jik peut être équipée d'un moyen d'amortissement MA destiné à limiter la vitesse de ses rabattements et redressements. Par exemple, on peut utiliser un amortisseur MA dont l'une des extrémités est solidarisée à l'un des deux montants (par exemple le premier Mi1k), par exemple au voisinage de son extrémité supérieure (voisine d'une partie latérale PLk), tandis que l'autre extrémité est solidarisée à l'autre montant (par exemple le second Mi2k), par exemple au voisinage de son extrémité inférieure (voisine d'une platine PTik).

On notera également qu'afin de faciliter les translations du chariot de transport CT replié, vers l'avant ou l'arrière, sur un plancher PLV, ses parties latérales PLk et/ou ses cadres CDi peuvent être équipé(e)s de roulettes auxiliaires RA dont la surface de roulement dépasse très légèrement afin de ne pas augmenter l'encombrement vertical de façon significative.

On notera également que dans l'exemple non limitatif illustré sur les figures 1 à 7, la structure de support SS présente une grande extension suivant la direction longitudinale qui permet de loger intégralement sous sa surface supérieure non seulement la paire de jambes arrière (J11, J12), mais également la paire de jambes avant (J21, J22). Par exemple, les dimensions de cette structure de support SS suivant les directions longitudinale et transversale sont respectivement égales à environ 240 cm et environ 60 cm.

Mais la structure de support SS peut présenter une dimension suivant la direction longitudinale qui ne permet pas à l'une au moins des paires de jambes Jik d'être simplement rabattue sans dépasser de la partie arrière PR ou sans gêner le rabattement de la paire de jambes arrière J1k. Cette situation peut notamment survenir dans le cadre d'une même application aux véhicules de type utilitaire, lorsque la dimension (ou longueur) de la structure de support SS suivant la direction longitudinale devient notablement inférieure à 240 cm.

Ainsi, dans le cas d'une longueur égale à environ 200 cm, on est contraint de solidariser fixement aux parties latérales PLik une paire de glissières arrière dans lesquelles peuvent coulisser (suivant la direction longitudinale) des platines auxiliaires (supérieures) auxquelles sont respectivement solidarisées à rotation les extrémités supérieures des montants arrière M1jk et qui participent à la définition du parallélépipède auquel appartiennent ces derniers (M1jk). Grâce à ces glissières arrière, une fois que les jambes arrière J1k associées ont été rabattues, elles peuvent être translatées vers l'avant via leurs platines auxiliaires (supérieures) et ainsi se retrouver logées intégralement sous la surface supérieure de la structure de support SS.

Dans le cas d'une longueur égale à environ 160 cm, on est contraint de solidariser fixement aux parties latérales PLik, d'une part, une paire de glissières arrière dans lesquelles peuvent coulisser (suivant la direction longitudinale) des platines auxiliaires (supérieures) auxquelles sont respectivement solidarisées à rotation les extrémités supérieures des montants arrière M1jk et qui participent à la définition du parallélogramme auquel appartiennent ces derniers (M1jk), et, d'autre part, une paire de glissières avant dans lesquelles peuvent coulisser (suivant la direction longitudinale) des platines auxiliaires (supérieures) auxquelles sont respectivement solidarisées à rotation les extrémités supérieures des montants avant M2jk et qui participent à la définition du parallélépipède auquel appartiennent ces derniers (M2jk). Grâce aux glissières avant, une fois que les jambes avant J2k associées ont été rabattues, elles peuvent être translatées vers l'avant via leurs platines auxiliaires (supérieures) et ainsi se retrouver logées intégralement sous la surface supérieure de la structure de support SS, et grâce aux glissières arrière, une fois que les jambes arrière J1k associées ont été rabattues, elles peuvent être translatées vers l'avant via leurs platines auxiliaires (supérieures) et ainsi se retrouver logées intégralement sous la surface supérieure de la structure de support SS.

Lorsque la longueur devient notablement inférieure à 160 cm, le chariot de transport CT ne peut plus comporter qu'une seule paire de jambes J1 k, comme illustré sur les figures 8 à 16. En effet, sa structure de support SS ne peut loger intégralement qu'une unique paire de jambes J1 k. Dans ce cas, il est préférable pour une question de stabilité, comme illustré sur les figures 8 à 16, que le chariot de transport CT comprenne un cadre inférieur CI comportant deux bords longitudinaux à chacun desquels sont solidarisés à rotation suivant la direction longitudinale et à des niveaux différents suivant cette dernière deux platines PTik supportant chacune une roue Rik.

Dans ce cas, les éventuels cadres CDi, auxquels sont solidarisés à rotation les platines PTik d'une même paire de jambes Jik, peuvent constituer des sous-parties avant et arrière du cadre inférieur CI, comme illustré.

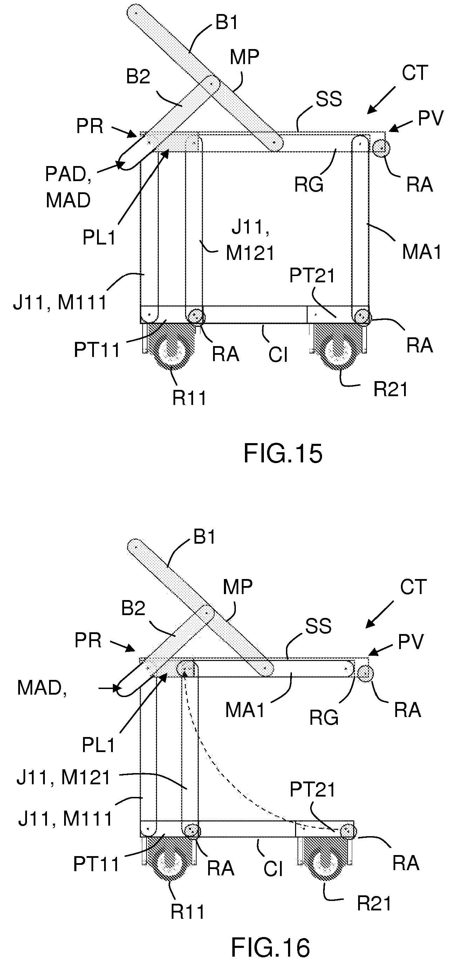

Par ailleurs, et toujours dans le dernier cas, lorsque le chariot de transport CT est destiné à transporter des charges CH relativement lourdes, il peut être avantageux qu'il comprenne, dans la partie avant de son cadre inférieur CI (à quatre roues Rik), deux montants auxiliaires MAk de renfort. Chaque montant auxiliaire MAk comprend des première et seconde extrémités opposées. La première extrémité (supérieure) est montée à rotation suivant la direction transversale sur l'une des parties longitudinales PLk. La seconde extrémité (inférieure) peut être soit solidarisée à l'un des bords longitudinaux du cadre inférieur CI (en position déployée (voir figure 15)), soit désolidarisée de ce bord longitudinal afin que son montant auxiliaire MAk puisse être rabattu sensiblement parallèlement à la partie longitudinale PLk correspondante (voir figure 16).

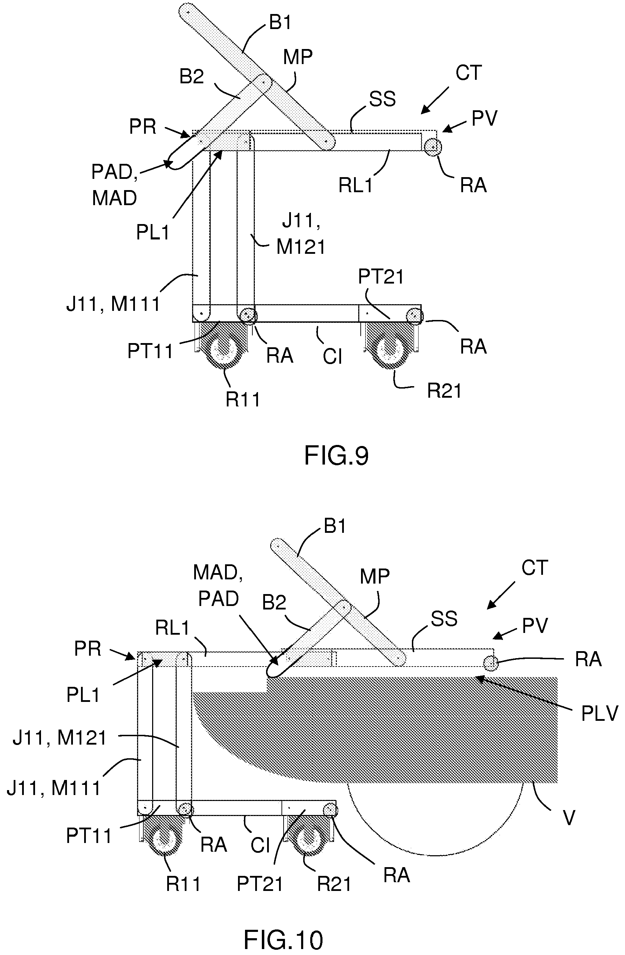

On notera, comme illustré sur les figures 5 à 11, que la structure de support SS peut être montée coulissante sur deux rails longitudinaux latéraux RLk. Cela permet en effet de translater vers l'avant suffisamment profondément dans le véhicule V la partie avant PV de la structure de support SS afin qu'elle puisse s'appuyer sur le plancher PLV sans risque de basculement du chariot de transport CT vers l'arrière. En variante, il est également possible de déplier d'abord un système de rails à l'intérieur du véhicule, puis de déplacer la structure de support SS qui dans ce cas reste solidaire du rail RLk devenu rail intermédiaire. On notera que dans ce mode de réalisation les extrémités supérieures des montants M1jk des jambes arrière J1k sont solidarisées à rotation aux rails longitudinaux latéraux RLk (qui constituent une sous-partie de la structure de support SS).
On a schématiquement illustré sur les figures 10 à 13 différents stades d'une phase d'installation d'un chariot de transport CT, du type de celui illustré sur la figure 9, dans une partie arrière d'un véhicule V. Une fois que la partie arrière du véhicule V est accessible, on pousse le chariot de transport CT vers le véhicule V en faisant pénétrer dans cette partie arrière de véhicule V, au-dessus de son plancher PLV, la partie avant PV de sa structure de support SS et en plaçant le cadre inférieur CI en partie sous le véhicule V. Puis, on translate vers l'avant la structure de support SS en la faisant coulisser sur les deux rails longitudinaux latéraux RLk, jusqu'à ce qu'elle arrive en butée (voir figure 10).

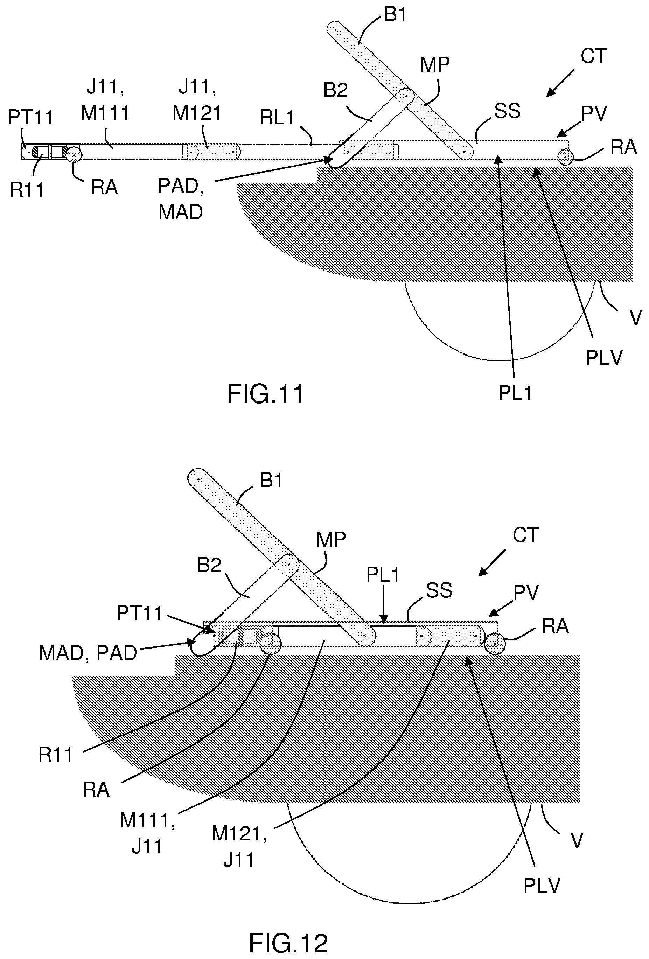

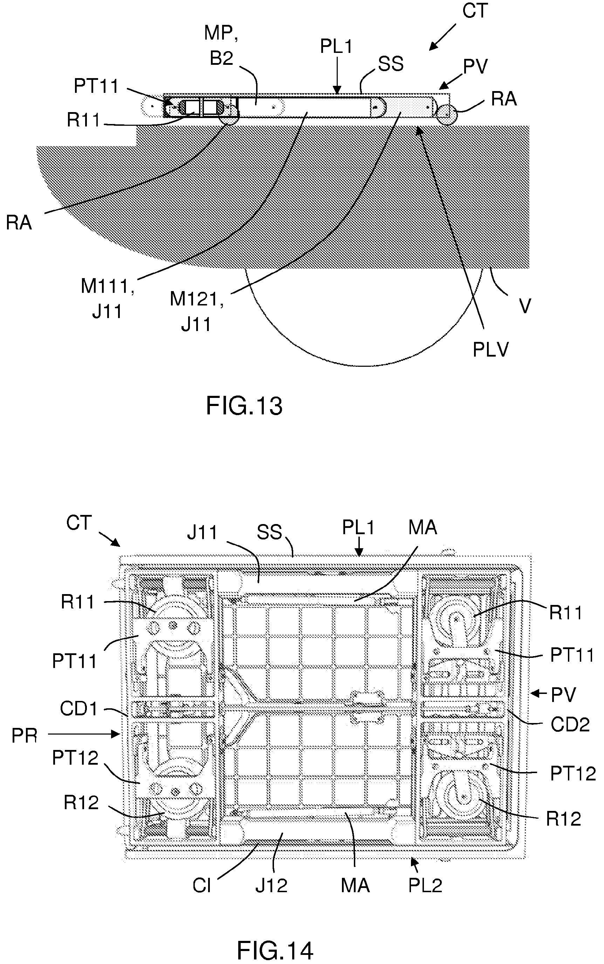

Lorsque les jambes arrière J11 et J12 entrent en contact avec le véhicule V, elles sont contraintes de se rabattre vers l'arrière parallèlement aux rails longitudinaux latéraux RLk (voir figure 11). Ensuite, on translate vers l'avant les rails longitudinaux latéraux RLk avec les jambes arrière J1k rabattues, afin qu'ils viennent tous se loger sous la structure de support SS et ainsi être intégralement contenus dans l'espace qui est défini par l'extension verticale de des parties latérales PLk (voir figure 12). La phase de translation des rails longitudinaux latéraux RLk avec les jambes arrière J1k, contre le plancher PLV, provoque le rabattement des roues arrière R1 k et avant R2k. Ensuite, on continue de pousser le chariot de transport CT replié vers l'avant du véhicule V jusqu'à ce qu'il parvienne dans une position d'immobilisation, de préférence prédéfinie, où il peut être immobilisé par tout moyen connu de l'homme de l'art, et par exemple grâce à des moyens d'ancrage définis dans le plancher PLV du véhicule V. A titre d'exemple, on pourra adopter des moyens d'ancrage similaires à ceux qui sont utilisés pour certaines banquettes arrière rabattables de véhicule, ou bien des moyens d'ancrage similaires à ceux qui sont utilisés pour ancrer sur des rails des sièges individuels de véhicules de type monospace, et/ou des moyens d'ancrage similaires à ceux de type Isofix qui sont utilisés pour ancrer des sièges enfants. Enfin, lorsque le chariot de transport CT comprend des moyens de préhension MP, comme illustré, on rabat ces derniers (MP) en direction de la structure de support SS afin qu'ils soient intégralement contenus dans l'espace qui est défini par l'extension verticale des parties latérales PLk, éventuellement à l'extérieur de ces dernières (PLk) (voir figure 13).

Pour procéder à l'extraction du chariot de transport CT hors du véhicule V, on effectue les opérations présentées ci-avant dans le sens inverse, en commençant par faire coulisser vers l'arrière les rails longitudinaux latéraux RLk avec les jambes arrière J1k rabattues afin que ces dernières (J1k) se retrouvent en porte à faux dans le vide (à l'extérieur du véhicule V) et ainsi puissent se redresser afin de pouvoir de nouveau supporter la structure de support SS et ses éventuelles charges CH. Ensuite on tire sur les éventuels moyens de préhension MP (après qu'ils aient été redressés) afin de faire coulisser la structure de support SS sur les rails longitudinaux latéraux RLk.

On notera qu'il est préférable que le chariot de transport CT comprenne un mécanisme de verrouillage destiné à verrouiller chacune de ses jambes Jik au moins lorsqu'elles sont en position redressée (et donc prêtes à supporter des charges CH). Il est également possible d'équiper les roues Rik de moyens de freinage et/ou de blocage (éventuellement de leur indexation lorsqu'elles sont montées pivotantes). Il est également possible d'équiper le chariot de transport CT de moyens sécuritaires complémentaires destinés à éviter son repliement intempestif en cours de manipulation.

Une façon d'obtenir le pivotement des roues Rik sous charge est d'adopter des roues à galets omnidirectionnelles, avec comme condition le fait que l'axe de rotation des galets doit être sensiblement parallèle à l'axe de rotation permettant l'inclinaison latérale des roues. De préférence, l'axe de rotation longitudinal des roues Rik est positionné au plus près du sol, voire quasiment en coïncidence avec la zone de contact de la roue Rik.

On notera également que lorsque la longueur du chariot de transport CT devient notablement inférieure à une longueur d'environ 800 mm, il devient possible de se passer des roues avant, lesquelles peuvent alors être remplacées par des pieds ayant la même cinématique, notamment pour assurer la stabilité à l'arrêt.

On notera également que le chariot de transport CT peut comprendre, d'une part, au moins un moteur électrique (non représenté) propre à entraîner en rotation les jambes Jik d'au moins l'une de ses paires de jambes afin de les faire passer d'une position redressée, adaptée au support, à une position rabattue, et inversement, et, d'autre part, une batterie (non représentée) propre à alimenter chaque moteur électrique en énergie électrique. Cette option est destinée à permettre l'automatisation du déploiement et du repliement du chariot de transport CT.

On notera également que la structure de support SS peut éventuellement comprendre au moins une première prise électrique qui est destinée à être raccordée à une deuxième prise électrique d'alimentation installée dans le véhicule V et par exemple couplée au circuit d'alimentation électrique dudit véhicule V.

Cette première prise électrique peut être directement couplée à un ou plusieurs équipements électriques qui font éventuellement partie de la structure de support SS, comme par exemple l'éventuelle batterie (afin de la recharger, éventuellement via un convertisseur basse tension (typiquement 12 V ou 24 V)). En variante, la première prise électrique peut être également raccordée à au moins une troisième prise électrique solidarisée à la structure de support SS et à laquelle peut être raccordée une prise électrique d'un élément électrique supporté par cette structure de support SS, comme par exemple l'éventuelle batterie ou un éventuel système de réfrigération, ou un éventuel outil. L'outil peut être, par exemple une perceuse ou une visseuse, éventuellement sans fil, ou un compresseur destiné à fournir de l'air comprimé. On notera que l'on peut également utiliser une source d'air comprimé du véhicule V pour actionner tout ou partie des éléments actionnables du chariot de transport CT (et notamment un vérin d'assistance (constituant un moyen d'amortissement ou un moyen d'aide au déploiement/repliement) ou bien un outil tel qu'une visseuse pneumatique ou encore des pieds télescopiques destinés à se substituer temporairement aux roues Rik.

Par exemple, la deuxième prise électrique d'alimentation peut être installée dans une zone du véhicule V destinée à accueillir la partie avant PV (ou arrière PR) de la structure de support SS. Dans ce cas, la première prise électrique peut, par exemple, être installée sur la partie avant PV de la structure de support SS afin de pouvoir être automatiquement accouplée à la deuxième prise électrique d'alimentation lorsque son chariot de transport CT est dans une position d'installation prédéfinie. En variante, la première prise électrique peut, par exemple, être installée sur la partie arrière PR de la structure de support SS afin de pouvoir être accouplée manuellement à la deuxième prise électrique d'alimentation lorsque son chariot de transport CT est dans une position d'installation prédéfinie. Dans ce dernier cas, l'accouplement électrique peut éventuellement et avantageusement définir un arrêt de charge permettant d'immobiliser le chariot de transport CT dans le véhicule V suivant la direction longitudinale, et/ou empêcher qu'une personne retire le chariot de transport CT du véhicule V avant d'avoir désaccouplée la première prise électrique de la deuxième prise électrique d'alimentation.

On notera également que le chariot de transport CT, et notamment sa structure de support SS, peut être pourvu de moyens d'ancrage ou d'arrimage, comme par exemple des taquets ou des crochets ou encore des rails ou rainures, destinés à permettre l'ancrage ou l'arrimage de charges sur ladite structure de support SS.

On notera également que le véhicule V (et notamment sa partie arrière) peut être éventuellement agencé de manière à recevoir au moins un chariot de transport CT après qu'il ait été configuré dans une position repliée de rangement. Dans ce cas, il comprend au moins une zone d'installation prédéfinie, c'est-à-dire aménagée de manière à accueillir un chariot de transport CT en vue de son immobilisation. Le véhicule V peut éventuellement comprendre deux zones d'installation longitudinales parallèles entre elles et auxquelles on accède par l'arrière du véhicule V, ou bien une zone d'installation longitudinale à laquelle on accède par l'arrière du véhicule V et une zone d'installation transversale à laquelle on accède par un côté latéral du véhicule.

Une zone d'installation peut éventuellement comporter un arrêt de charge, ou bien être définie dans un renfoncement dédié du plancher PLV (dans ce cas le chariot de transport CT peut éventuellement définir un faux-plancher). Par ailleurs, une zone d'installation peut éventuellement comporter des moyens de guidage et/ou des moyens de verrouillage destinés à immobiliser les moyens de préhension MP dans leur position rabattue.

Dans l'application illustrée où le chariot CT devient, une fois plié et déposé, un élément modulaire définissant un faux-plancher du véhicule, il peut être décliné en de nombreuses versions qui peuvent, par exemple correspondre aux standards des « demi-europalettes » 600 mm x 1200 mm, et notamment :
- une version de type XS correspondant à un chariot CT à deux plateaux de 600 mm x 400 mm,
- une version de type S correspondant à un chariot CT de 600 mm x 800 mm,
- une version de type L correspondant à un chariot CT de 600 mm x 1600 mm,
- une version de type XL correspondant à un chariot CT de 600 mm x 2000 mm,
- une version de type XXL correspondant à un chariot CT de 600 mm x 2400 mm.

Ce faux-plancher auquel peut s'intégrer un système de rails carrossier peut être exploité de différentes façons, et notamment :
- en tant que plateau supérieur conventionnel de transport de charge,
- en tant que plancher équipé d'aménagements professionnels dédiés, par exemple pour un véhicule utilitaire,
- en tant que plancher équipé d'équipements de carrosserie de type siège individuel, chaise roulante, tablette, et analogue.

De plus, dans les versions où le plateau supérieur est rendu coulissant, si on utilise un même système de glissières amovibles, alors un même dispositif peut être exploité par un ou plusieurs plateaux rendus compatibles au niveau des glissières et pouvant être échangés sous réserve de présenter des dimensions similaires.

L'invention ne se limite pas aux modes de réalisation de chariot de transport et de véhicule décrits ci-avant, seulement à titre d'exemple, mais elle englobe toutes les variantes que pourra envisager l'homme de l'art dans le cadre des revendications ci-après.

## Revendications

1. Chariot de transport (CT), comprenant une structure (SS) de support de charge(s), comportant deux parties longitudinales (PLk), et au moins une paire de jambes (Jik) solidarisées à rotation suivant une direction transversale respectivement auxdites parties longitudinales (PLk) et munies chacune d'au moins une roue (Rik), chaque jambe (Jik) d'une même paire comprenant deux montants (Mijk) qui, d'une part, comportent deux extrémités opposées solidarisées respectivement à la partie longitudinale (PLk) correspondante et à une platine (PTik), supportant ladite roue (Rik), et, d'autre part, participent avec cette platine (PTik) à la définition d'un parallélépipède déformable dans lequel lesdits montants (Mijk) sont rabattables sensiblement parallèlement à la partie longitudinale (PLk) correspondante, ce chariot étant **caractérisé en ce que** ladite platine (PTik) est en outre montée à rotation suivant une direction longitudinale de sorte que sa roue (Rik) puisse pivoter sous charge et passer d'une position dépliée sensiblement verticale à une position rabattue sensiblement perpendiculaire à la partie longitudinale (PLk) correspondante et au niveau de cette dernière (PLk), et **en ce qu'**il comprend en outre des moyens d'adaptation (MAD) propres à permettre une élévation de ladite structure (SS) par rapport à un sol sur lequel reposent lesdites roues (Rik) en vue d'une adaptation à une hauteur à laquelle est situé un plancher (PV) de dépose.

2. Chariot selon la revendication 1, **caractérisé en ce que** lesdits moyens d'adaptation (MAD) comprennent au moins deux pieds et/ou au moins deux roulettes escamotables.

3. Chariot selon l'une des revendications 1 et 2, **caractérisé en ce qu'**il comprend des moyens de préhension (MP) montés à rotation suivant ladite direction transversale sur une portion arrière desdites parties longitudinales (PLk) de manière à pouvoir être placés soit dans une position redressée adaptée à la préhension, soit dans une position rabattue sensiblement perpendiculaire auxdites parties longitudinales (PLk) et au niveau de ces dernières (PLk).

4. Chariot selon la revendication 3, **caractérisé en ce qu'**il comprend une paire de glissières solidarisées fixement auxdites parties longitudinales (PLk) et auxquelles sont couplées à coulissement et respectivement des premières extrémités de premières barres (B1) faisant partie desdits moyens de préhension (MP).

5. Chariot selon la revendication 4, **caractérisé en ce que** lesdits moyens de préhension (MP) comprennent une barre de préhension (BP), sensiblement transversale et couplée à des secondes extrémités desdites premières barres (B1), et deux secondes barres (B2), comprenant chacune une première extrémité couplée à rotation à une partie intermédiaire de l'une desdites premières barres (B1) et une seconde extrémité couplée à rotation à l'une desdites parties longitudinales (PLk).

6. Chariot selon la revendication 5, **caractérisé en ce que** chaque seconde extrémité d'une seconde barre (B2) se projette en dessous de la partie longitudinale (PLk) à laquelle elle est couplée à rotation lorsque sa seconde barre (B2) fait un angle supérieur à une première valeur prédéfinie par rapport à cette partie longitudinale (PLk), de manière à constituer une partie (PAD) desdits moyens d'adaptation (MAD).

7. Chariot selon l'une des revendications 1 à 6, **caractérisé en ce que** ledit parallélépipède déformable est propre à se déformer en vue d'un repliement longitudinal avant que lesdites roues (Rik) ne pivotent sous charge pour passer dans leur position rabattue.

8. Chariot selon l'une des revendications 1 à 7, **caractérisé en ce que** lesdites roues (Rik) sont propres à pivoter sous charge pour passer dans leur position rabattue avant que ledit parallélépipède déformable ne se déforme.

9. Chariot selon l'une des revendications 1 à 7, **caractérisé en ce qu'**il comprend des moyens de couplage assurant un couplage mécanique desdites roues (Rik) et desdites jambes (Jik) d'au moins une paire, de sorte que ledit parallélépipède déformable se déforme en vue d'un repliement longitudinal en même temps que lesdites roues (Rik) pivotent sous charge pour passer dans leur position rabattue.

10. Chariot selon l'une des revendications 1 à 9, **caractérisé en ce qu'**il comprend une paire de jambes (J1k) dite arrière et une paire de jambes (J2k) dite avant placées à des niveaux différents suivant ladite direction longitudinale.

11. Chariot selon l'une des revendications 1 à 10, **caractérisé en ce qu'**il comprend un cadre inférieur (CI) comportant deux bords longitudinaux munis chacun de deux platines (PTik) supportant chacune une roue (Rik) et montées à rotation suivant ladite direction longitudinale et à des niveaux différents suivant cette dernière.

12. Chariot selon l'une des revendications 1 à 11, **caractérisé en ce qu'**il comprend au moins une paire de glissières solidarisées fixement auxdites parties longitudinales (PLk) et auxquelles sont couplées à coulissement et respectivement lesdites jambes (Jik) d'une paire.

13. Chariot selon l'une des revendications 1 à 12, **caractérisé en ce qu'**il comprend au moins un moteur électrique propre à entraîner en rotation lesdites jambes (Jik) d'au moins une même paire afin de les faire passer d'une position redressée adaptée au support à une position rabattue, et inversement, et une batterie propre à alimenter ledit moteur électrique en énergie électrique.

14. Chariot selon l'une des revendications 1 à 13, **caractérisé en ce que** ladite structure (SS) comprend au moins une première prise électrique propre à être raccordée à une deuxième prise électrique d'alimentation.

## Patentansprüche

1. Transportwagen (CT), der einen Aufbau (SS) zum Tragen von Last(en) umfasst, der zwei Längsteile (PLk) und mindestens ein Paar Beine (Jik), die in Drehung entlang einer Richtung quer jeweils zu den Längsteilen (PLk) fest verbunden und jeweils mit mindestens einem Rad (Rik) versehen sind, wobei jedes Bein (Jik) eines Paars zwei Ständer (Mijk) umfasst, die einerseits zwei entgegengesetzte Enden, die jeweils fest mit dem entsprechenden Längsteil (PLk) und einer Platte (PTik), die das Rad (Rik) trägt, verbunden sind, und andererseits mit dieser Platte (PTik) an der Definition eines verformbaren Parallelepipeds teilnehmen, wobei die Ständer (Mijk) im Wesentlichen parallel zu dem entsprechenden Längsteil (PLk) zurückklappbar sind, Wagen **dadurch gekennzeichnet, dass** die Platte (PTik) in Drehung entlang einer Längsrichtung derart montiert ist, dass ihr Rad (Rik) unter Belastung schwenken und von einer im Wesentlichen vertikalen aufgefalteten Position zu einer zurückgeklappten Position übergehen kann, die im Wesentlichen zu dem entsprechenden Längsteil (PLk) senkrecht ist und im Bereich dieses Letzteren (PLk), und dass er außerdem Einrichtungsmittel (MAD) umfasst, die geeignet sind, ein Erhöhen des Aufbaus (SS) in Bezug auf einen Boden zu erlauben, auf dem die Räder (Rik) ruhen, um an eine Höhe, in der sich ein Ablagefußboden (PV) befindet, angepasst zu werden.

2. Wagen nach Anspruch 1, **dadurch gekennzeichnet, dass** die Einrichtungsmittel (MAD) mindestens zwei Füße und/oder mindestens zwei versenkbare Rollen umfassen.

3. Wagen nach einem der Ansprüche 1 und 2, **dadurch gekennzeichnet, dass** er Greifmittel (MP) umfasst, die in Drehung entlang der Querrichtung auf einem hinteren Abschnitt der Längsteile (PLk) derart installiert sind, dass sie entweder in eine aufgerichtete Position, die für das Greifen angepasst ist, oder in eine zurückgeklappte Position platziert werden können, die im Wesentlichen zu den Längsteilen (PLk) senkrecht ist und auf dem Niveau dieser Letzteren (PLk) platziert werden können.

4. Wagen nach Anspruch 3, **dadurch gekennzeichnet, dass** er ein Paar Gleitführungen umfasst, die fest an den Längsteilen (PLk) befestigt sind, und an welchen gleitend jeweils erste Enden erster Stangen (B1), die zu den Greifmitteln (MP) gehören, gekoppelt sind.

5. Wagen nach Anspruch 4, **dadurch gekennzeichnet, dass** die Greifmittel (MP) eine Greifstange (BP) umfassen, die im Wesentlichen quer und mit zweiten Enden der ersten Stangen (B1) gekoppelt ist, und zweite Stangen (B2), die jeweils ein erstes Ende umfassen, das in Drehung mit einem Zwischenteil einer der ersten Stangen (B1) gekoppelt ist, und ein zweites Ende, das in Drehung mit einem der Längsteile (PLk) gekoppelt ist.

6. Wagen nach Anspruch 5, **dadurch gekennzeichnet, dass** jedes zweite Ende einer zweiten Stange (B2) unter den Längsteil (PLk), mit dem es in Drehung gekoppelt ist, vorsteht, wenn seine zweite Stange (B2) einen Winkel größer als ein erster vordefinierter Wert in Bezug zu diesem Längsteil (PLk) derart einnimmt, dass ein Teil (PAD) der Einrichtungsmittel (MAD) gebildet wird.

7. Wagen nach einem der Ansprüche 1 bis 6, **dadurch gekennzeichnet, dass** das verformbare Parallelepiped geeignet ist, sich zu einem Längszurückfalten zu verformen, bevor die Räder (Rik) unter Last schwenken, um in ihre zurückgeklappte Position überzugehen.

8. Wagen nach einem der Ansprüche 1 bis 7, **dadurch gekennzeichnet, dass** die Räder (Rik) geeignet sind, unter Last zu schwenken, um in ihre zurückgeklappte Position überzugehen, bevor sich das verformbare Parallelepiped verformt.

9. Wagen nach einem der Ansprüche 1 bis 7, **dadurch gekennzeichnet, dass** er Kopplungsmittel umfasst, die ein mechanisches Koppeln der Räder (Rik) und der Beine (Jik) mindestens eines Paars derart sicherstellen, dass sich das verformbare Parallelepiped für ein Längszurückfalten gleichzeitig mit dem Schwenken der Räder (Rik) unter Last, um in ihre zurückgeklappten Position überzugehen, verformt.

10. Wagen nach einem der Ansprüche 1 bis 9, **dadurch gekennzeichnet, dass** er ein Paar Beine (J1k), hintere Beine genannt, und ein Paar Beine (J2k), vordere Beine genannt, umfasst, die an unterschiedlichen Niveaus entlang der Längsrichtung platziert sind.

11. Wagen nach einem der Ansprüche 1 bis 10, **dadurch gekennzeichnet, dass** er einen unteren Rahmen (Cl) umfasst, der zwei Längsränder umfasst, die jeweils mit zwei Platten (PTik) versehen sind, die jeweils ein Rad (Rik) tragen und in Drehung entlang der Längsrichtung und auf unterschiedlichen Niveaus dieser Letzteren installiert sind.

12. Wagen nach einem der Ansprüche 1 bis 11, **dadurch gekennzeichnet, dass** er mindestens ein Paar Gleitführungen umfasst, die fest mit den Längsteilen (PLk) verbunden sind, und an welchen gleitend jeweils die Beine (Jik) eines Paars gekoppelt sind.

13. Wagen nach einem der Ansprüche 1 bis 12, **dadurch gekennzeichnet, dass** er mindestens einen Elektromotor umfasst, der geeignet ist, die Beine (Jik) mindestens eines gleichen Paars anzutreiben, um sie von einer aufgerichteten Position, die für das Stützen angepasst ist, in eine zurückgeklappte Position und umgekehrt übergehen zu lassen, und eine Batterie, die geeignet ist, den Elektromotor mit Strom zu versorgen.

14. Wagen nach einem der Ansprüche 1 bis 13, **dadurch gekennzeichnet, dass** der Aufbau (SS) mindestens einen ersten Steckverbinder umfasst, der geeignet ist, an einen zweiten Versorgungssteckverbinder angeschlossen zu werden.

## Claims

1. A transport trolley (CT) including a load supporting structure (SS), comprising two longitudinal parts (PLk), and at least one pair of legs (Jik) that are secured so as to rotate along a transverse direction respectively to said longitudinal parts (PLk) and are each provided with at least one wheel (Rik), each leg (Jik) of a same pair including two uprights (Mijk) which, on the one hand, comprise two opposite ends respectively secured to the corresponding longitudinal part (PLk) and to a plate (PTik), supporting said wheel (Rik), and, on the other hand, together with this plate (PTik), define a deformable parallelepiped in which the said uprights (Mijk) can be folded away substantially parallel to the corresponding longitudinal part (PLk), this trolley being **characterized in that** said plate (PTik) is, moreover, mounted so as to rotate in a longitudinal direction such that its wheel (Rik) can pivot under load and move from a substantially vertical folded-out position to a folded-away position substantially perpendicular to the corresponding longitudinal part (PLk) and at the level of the latter (PLk), and **in that** it furthermore includes adaptation means (MAD) which are designed to allow the said structure (SS) to be raised with respect to a ground on which the said wheels (Rik) rest, in order to adapt to a height at which a deposition platform (PV) is located.

2. The trolley according to Claim 1, **characterized in that** said adaptation means (MAD) include at least two feet and/or at least two retractable rollers.

3. The trolley according to one of Claims 1 and 2, **characterized in that** it includes gripping means (MP) mounted so as to rotate in said transverse direction over a rear portion of said longitudinal parts (PLk) so as to be able to be placed either in an upright position adapted to gripping, or in a folded-away position substantially perpendicular to said longitudinal parts (PLk) and at the level of these latter (PLk).

4. The trolley according to Claim 3, **characterized in that** it includes a pair of slides secured fixedly to the said longitudinal parts (PLk) and to which are coupled slidingly and respectively first ends of first bars (B1) forming part of said gripping means (MP).

5. The trolley according to Claim 4, **characterized in that** said gripping means (MP) include a gripping bar (BP) which is substantially transverse and coupled to second ends of said first bars (B1), and two second bars (B2), each including a first end coupled rotatably to an intermediate part of one of said first bars (B1) and a second end coupled rotatably to one of said longitudinal parts (PLk).

6. The trolley according to Claim 5, **characterized in that** each second end of a second bar (B2) projects beneath the longitudinal part (PLk) to which it is rotatably coupled when its second bar (B2) forms an angle greater than a first predefined value with respect to this longitudinal part (PLk), so as to constitute a part (PAD) of said adaptation means (MAD).

7. The trolley according to one of Claims 1 to 6, **characterized in that** said deformable parallelepiped is suitable for deforming with a view to a longitudinal folding before the said wheels (Rik) pivot under load to move into their folded-away position.

8. The trolley according to one of Claims 1 to 7, **characterized in that** the said wheels (Rik) are suitable for pivoting under load to move into their folded-away position before the said deformable parallelepiped deforms.

9. The trolley according to one of Claims 1 to 7, **characterized in that** it includes coupling means ensuring a mechanical coupling of the said wheels (Rik) and of the said legs (Jik) of at least one pair, such that said deformable parallelepiped deforms with a view to a longitudinal folding at the same time as the said wheels (Rik) pivot under load to move into their folded-away position.

10. The trolley according to one of Claims 1 to 9, **characterized in that** it includes a pair of legs (J1k), designated rear pair, and a pair of legs (J2k), designated front pair, placed at different levels along said longitudinal direction.

11. The trolley according to one of Claims 1 to 10, **characterized in that** it includes a lower frame (CI) comprising two longitudinal edges each provided with two plates (PTik) each supporting a wheel (Rik) and mounted so as to rotate along said longitudinal direction and at different levels along the latter.

12. The trolley according to one of Claims 1 to 11, **characterized in that** it includes at least one pair of slides secured fixedly to the said longitudinal parts (PLk) and to which are coupled slidingly and respectively the said legs (Jik) of a pair.

13. The trolley according to one of Claims 1 to 12, **characterized in that** it includes at least one electric motor suitable for driving in rotation the said legs (Jik) of at least one same pair so as to cause them to move from an upright position suited to support to a folded-away position, and vice versa, and a battery suited to supply the said electric motor with electrical energy.

14. The trolley according to one of Claims 1 to 13, **characterized in that** the said structure (SS) includes at least a first electric socket suited to be connected to a second electric supply outlet.
